# EUROPEAN PATENT APPLICATION

(11) **EP 1 744 506 A2**
(43) Date of publication of application: **17.01.2007**
(21) Application number: 06253626.3
(22) Date of filing: 11.07.2006
(51) Int. Cl.: H04L 12/56

(54) **Mobile radio station and communication parameter control method thereof**

(30) Priority: 11.07.2005 JP 2005201714
(71) Applicant: NTT DoCoMo INC., Chiyoda-ku Tokyo 100-6150 (JP)
(72) Inventor: Okamoto, Etsuhiro, c/o IP Dpt., NTT DoCoMo Inc., Chiyoda-ku, Tokyo 100-6150 (JP); Okumura, Yukihiko, c/o IP Dpt., NTT DoCoMo Inc., Chiyoda-ku, Tokyo 100-6150 (JP); Iwanaga, Mitsuo, c/o IP Dpt., NTT DoCoMo Inc., Chiyoda-ku, Tokyo 100-6150 (JP)
(74) Representative: Beresford, Keith Denis Lewis

(57) **Abstract**

There is provided a mobile radio station and a communication parameter control method thereof capable of shortening a time period required for speed detection and thereby controlling a communication parameter quickly and with little power. A mobile radio station performing communication based on a communication parameter preliminarily set includes a positioning unit measuring a position of the own apparatus based on information acquired via GPS and/or information acquired from at least one base station, a speed detection unit detecting a moving speed of the own apparatus based on positions measured at different times, and a parameter selection function unit varying the communication parameter according to the moving speed detected. The positioning unit may calculate a distance from the base station to the mobile radio station based on a time period from when a signal is sent from the base station to when the signal reaches the mobile radio station.

## Description

The present invention relates to a mobile radio station and a communication parameter control method thereof, and more particularly to a mobile radio station performing wireless data communication with an opposite radio station based on communication parameters preliminarily set, and a communication parameter control method thereof.

In radio communications systems using W-CDMA being the third generation mobile phone (3G) communication scheme, communication with an opposite radio station is performed based on communication parameters considered optimum at an assumed moving speed from preliminary tests and experiments. Communication parameters include T-reselection, Q-hyst, Timer To Trigger of each event, Band Search period, upper and lower limits of Target SIR, and power value variable range and the frequency of varying power value in transmission power control, which are defined by 3GPP. Some of these communication parameters are specified from a radio station, and the others are set in the mobile radio station itself.

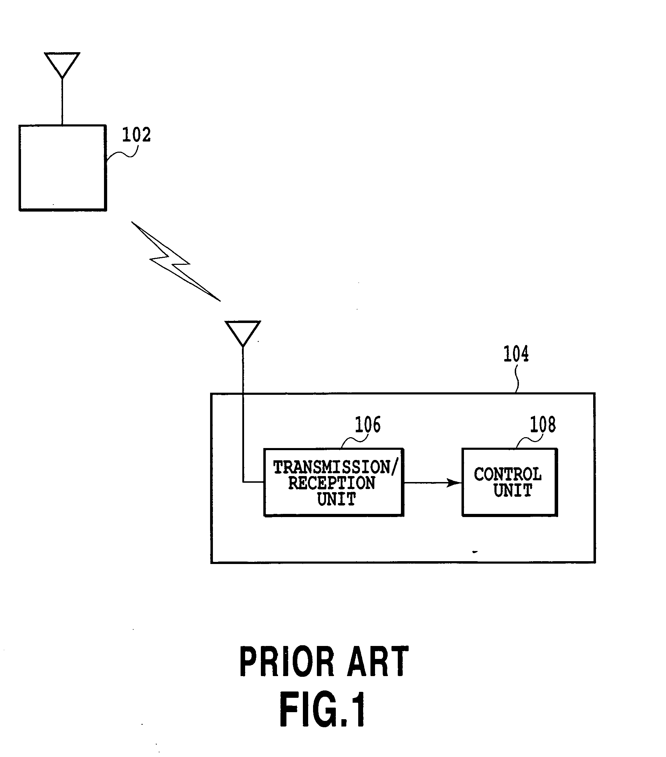

For example, in an example shown in FIG. 1, a mobile radio station 104 receives communication parameters from abase station 102. The communication parameters are passed to a control unit 108 via a transmission/reception unit 106. The control unit 108 performs control using the communication parameters specified from the base station 102 and the communication parameters which the control unit 108 has.

There has been proposed that, to determine optimum communication parameters, a moving speed in a range where daily behavior is conducted is used as the aforementioned assumed moving speed, and quality comparison is made while various communication parameters are varied in various experiments, simulations and fields. According to this proposal, on the basis of the quality comparison result, communication parameters by which highest quality has been achieved are set to secure communication quality in a situation where the apparatus is usually used.

However, if communication parameters fixed in this manner are used, when the apparatus is almost stationary, inappropriate communication parameters will be used, thus causing power to be wastefully consumed.

Also, in the above described proposal, the assumed speed is not in high speed range. For example, T-reselection, Timer To Trigger and the like being parameters related to movement between cells, handover and the like, considerably contribute to communication quality as the moving speed varies. Accordingly, an operation, such as movement between cells or handover, cannot secure satisfactory communication quality at the time of high speed movement.

As a technique for solving this problem, there has been a method of detecting a moving speed of the mobile communication terminal and setting required parameters according to the moving speed (for example, refer to Japanese Patent Application Laid-open No. 5-037426 (1993)).

Also, there has been known that communication with a remote station is performed to output a control signal according to a relative moving speed of the remote station, and based on the control signal, communication parameters of its own station are varied (for example, refer to Japanese Patent Application Laid-open No. 11-220774 (1999)).

However, when algorithm for directly detecting a moving speed is implemented in a mobile apparatus, processing load for processing the algorithm for speed detection is added. This causes power consumption to increase; when processing circuit resources within the mobile apparatus are limited, it is even impossible that this same processing is implemented.

Also, in experiments for verifying algorithm of a mobile radio station autonomously performing speed detection, there has hitherto been detected no algorithm considered prominently effective.

Differently from this, as another technique for detecting a moving speed, there is a method of using information transmitted from GPS (Global Positioning System) satellite (hereinafter referred to as "GPS information"). However, this processing consumes much power, and further it takes time to capture a position. Also, in GPS, to acquire position information with high accuracy, it is needed to capture a certain number, or more of GPS satellites. Depending on environments, however, a required number of GPS information cannot be acquired, thus lowering the accuracy of position measurement, or making it impossible to perform position measurement itself.

The present invention has been devised in view of the above problem, and viewed from a first aspect seeks to provide a mobile radio station and a communication parameter control method thereof capable of shortening a time period required for speed detection and thereby controlling a communication parameter quickly with a little power.

Viewed from another aspect the present invention seeks to provide a mobile radio station and a communication parameter control method thereof capable of detecting a speed with a certain level, or more of accuracy at any place and thereby controlling communication parameters more properly.

To address and preferably solve the above problems, according to an aspect of the present invention, there is provided a mobile radio station communicating with an opposite radio station based on a communication parameter preliminarily set, the mobile radio station comprising: speed detection means for detecting a moving speed of the own apparatus based on information acquired via a satellite navigation system and/or information acquired from at least one base station; and control means for varying the communication parameter according to the moving speed detected by the speed detection means.

Here, the speed detection means may include positioning means for measuring a position of the own apparatus based on information acquired via the satellite navigation system and/or information acquired from at least one base station, and wherein the moving speed of the own apparatus is detected based on positions measured at different times by the positioning means.

Here, the positioning means may calculate a distance from the base station to the mobile radio station based on a time period from when a signal is sent from the base station to when the signal reaches the mobile radio station.

Also, the mobile radio station may further comprise a sensor detecting a moving speed of the own apparatus, wherein when moving speed detection by the speed detection means is not possible, the control means varies the communication parameter according to the moving speed of the own apparatus determined by using the sensor.

Also, the mobile radio station may further comprise: a sensor detecting the moving speed of the own apparatus; and determination means for determining by using the sensor whether the mobile radio station is in a stationary state, wherein when the determination means determined that the mobile radio station is in the stationary state, the speed detection means terminates moving speed detection.

Here, the sensor may be an acceleration sensor.

Also, when moving speed detection by the speed detection means is not possible, the control means may vary the communication parameter according to the moving speed of the own apparatus determined by using the sensor.

Also, moving speed detection by the speed detection means may be performed at a predetermined interval, and the control means may vary the communication parameter when a variation in the moving speed detected by the speed detection means is a predetermined value or more.

According to another aspect of the present invention, there is provided a communication parameter control method executed by a mobile radio station communicating with an opposite radio station based on a communication parameter preliminarily set, the communication parameter control method comprising the steps of: detecting a moving speed of the own apparatus based on information acquired via a satellite navigation system and/or information acquired from at least one base station; and varying the communication parameter according to the moving speed detected.

With the above configuration, on the basis of position information acquired via a satellite navigation system or information acquired by exchanging signals with an opposite radio station, information on moving speed is detected. Accordingly, when communication parameters suitable for movement environment of the mobile radio station are sequentially set, additional processing load required for speed detection can be reduced.

Also, by detecting a stationary state (stable state), communication parameters can be set such that power consumption is suppressed.

According to an embodiment of the present invention, a position of the own apparatus is measured based on information acquired via a satellite navigation system and/or information acquired from at least one base station, and a moving speed of the own apparatus is detected based on positions measured at different times, and the communication parameters are varied according to the moving speed detected. It is thus possible to shorten a time period required to capture information acquired via a satellite navigation system. Consequently, the speed required to acquire position information can be improved, or the time period required for speed detection can be shortened.

Consequently, power consumption is reduced, making it possible to lengthen the continuously usable time of the mobile radio station.

Also, even when a required number of satellites for acquiring position information cannot be captured, location information of the base station, an acceleration sensor or the like can be used instead to detect moving speed.

Further, the number of objects to be accessed for the purpose of acquiring position information can be increased. Accordingly, the accuracy of position information can be improved, making it possible to acquire speed information more accurately with a certain level, or more of accuracy at any situation.

The above and other objects, effects, features and advantages and aspects of the present invention will become more apparent from the following description of embodiments thereof taken in conjunction with the accompanying drawings.
FIG. 1 is a block diagram showing a configuration of a conventional radio communications system using W-CDMA;
FIG. 2 is a block diagram showing an illustrative mobile communications system having an embodiment of the present invention applied thereto;
FIG. 3 is a view conceptually showing a positioning technique using GPS information according to one embodiment of the present invention;
FIG. 4 is a view conceptually showing a positioning technique using information sent from a base station;
FIG. 5 is a flowchart showing a procedure of a communication parameter varying method executed by a mobile radio according to one embodiment of the present invention; and
FIG. 6 is a flowchart showing a procedure of a communication parameter varying method executed by a mobile radio according to one embodiment of the present invention.

Preferred embodiments of the present invention will be described below with reference to the drawings.

### (First Embodiment)

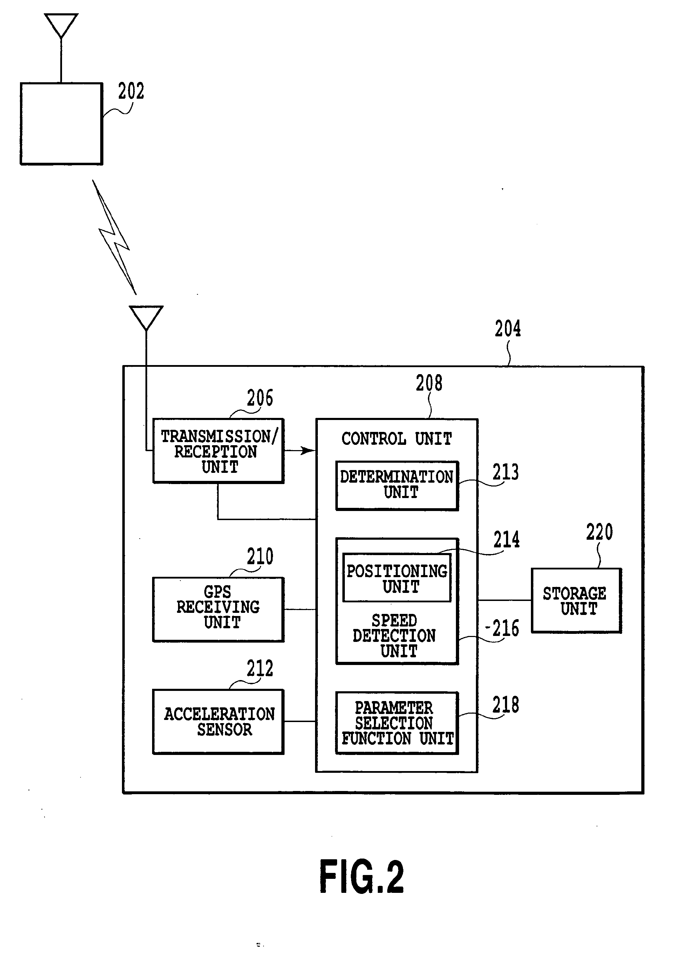

FIG. 2 is a block diagram showing an illustrative mobile communications system having an embodiment of the present invention applied thereto. The mobile communications system includes a base station 202 and a mobile radio station 204.

The mobile radio station 204 includes a transmission/reception unit 206 transmitting and receiving radio signals to/from an opposite station, a control unit 208 controlling the whole mobile radio station 204, a storage unit 220 for storing programs and data required for various processings including communication control according to the present embodiment, a GPS receiving unit 210 for receiving GPS information, and an acceleration sensor 212 detecting acceleration.

These functions of the mobile radio station 204 can be installed, for example in a mobile phone, a personal digital assistant (PDA), a PHS and a portable game machine.

With the above configuration, the mobile radio station 204 receives communication parameters from the base station 202. These communication parameters are passed to the control unit 208 via the transmission/reception unit 206. The control unit 208 uses the communication parameters specified from the base station 202 and communication parameters stored in the storage unit 220 to perform communication control.

The control unit 208 includes a determination unit 213 for determining an appropriate speed detection method, a speed detection unit 216 detecting a moving speed of the own apparatus, and a parameter selection function unit 218 controlling communication parameters. The speed detection unit 216 includes a positioning unit 214 measuring a position of the own apparatus.

The positioning unit 214 measures a position of the own apparatus based on GPS information received by the GPS receiving unit 210 and/or latitude/longitude information sent from at least one base station. The speed detection unit 216 detects a moving speed of the own apparatus based on the position measured by the positioning unit 214. The parameter selection function unit 218 rewrites the values of various communication parameters stored in the storage unit 220 according to the moving speed detected by the speed detection unit 216 or the moving speed determined by the acceleration sensor 212.

The method of the positioning unit 214 detecting a position of the own apparatus will now be described.

### (1) Positioning technique using GPS information

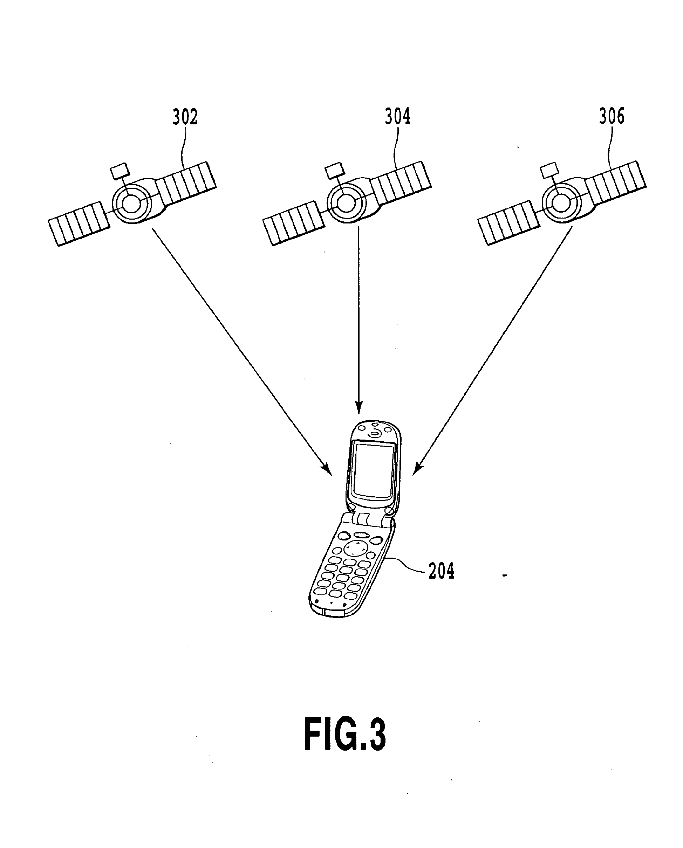

FIG. 3 is a view conceptually showing a positioning technique using GPS information.

The GPS receiving unit 210 receives radio wave radiated from a GPS satellite whose position is accurately known, and thereby determines a distance between the satellite and the mobile radio. In the distance determination, there is calculated a time period taken for radio wave radiated from the satellite to reach the mobile radio station. More specifically, on the basis of Almanac data, Ephemeris data, GPS clock time, ionosphere correction parameter and the like transmitted from the GPS satellite, a signal arrival time from the satellite to the mobile radio station is measured. A distance between each satellite and the mobile radio station is determined from the product of the time and the speed of light. As shown in FIG. 3, by performing this operation with respect to three satellites 302, 304 and 306, a position of the mobile radio station 204 is calculated by a three-point cross method.

As for GPS mobile radio station, theoretically, when radio waves are received from three satellites, a position of the mobile radio station 204 is calculated. However, the time clock accuracy of GPS is actually not so high. Accordingly, an error usually occurs in the distance between each satellite and the mobile radio station.

Thus, a distance between each of four satellites and the mobile radio station is usually measured, and on the basis of these relationships, a clock time with an error reduced is calculated to perform positioning.

### (2) Positioning technique using information acquired from a base station

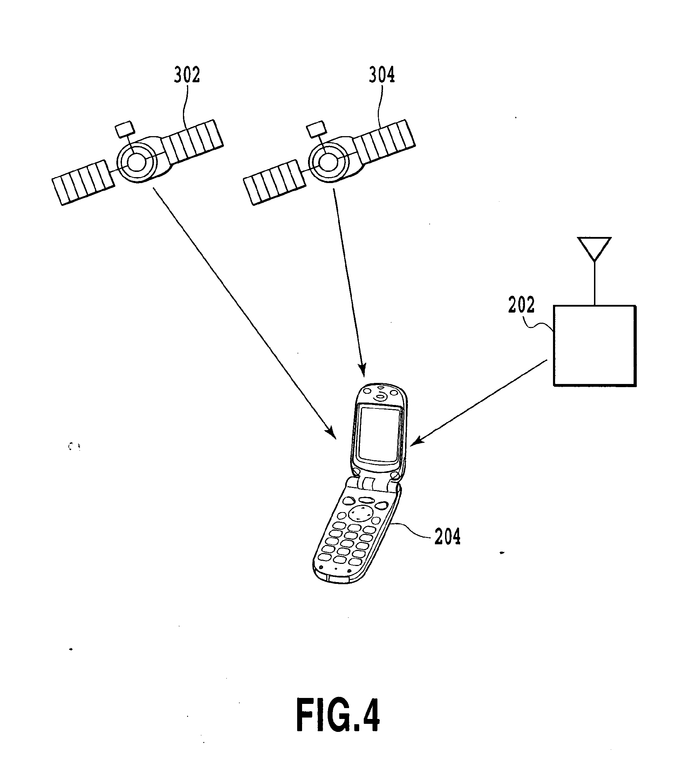

FIG. 4 is a view conceptually showing a positioning technique using information acquired from a base station.

In the GPS receiving unit 210, latitude/longitude information of a base station at whose area the mobile radio station locates and peripheral base stations transmitted from a GPS satellite is received and stored in the storage unit 220. On the basis of information sent from the base station 202, the positioning unit 214 measures a distance from the base station 202.

The distance between its own apparatus and the base station is calculated based on a time period from when a signal is sent from the base station to when the signal reaches the mobile radio station. More specifically, the following two methods can be used.

In the first method, when the mobile radio station receives time information from the base station, a distance is calculated from the product of the signal transmission speed and a time period from a clock time contained in the time information to when the mobile radio station receives the information. In this case, the clocks of the mobile radio station and base station must be accurately adjusted.

In the second method, a communication request is sent from the mobile radio station to the base station, and when a response thereof is received, a time period from when the request is sent to when the response is received is determined. Subsequently, a distance is calculated from the product of the signal transmission speed and one half of a value obtained by subtracting a predetermined margin from the time period determined. In this case, as the predetermined margin, there is set a time value (for example, 50 ms) equal to or longer than a time period required for the signal processing of the base station transmitting a response. After performing a predetermined signal processing, the base station sends back a response at the time when the time value has elapsed since receiving the request. Accordingly, distance measurement can be accurately performed in the mobile radio station.

Latitude/longitude information of the base station base station at whose area the mobile radio station locates and peripheral base stations may be acquired from the base station at whose area the mobile radio station locates instead of GPS.

As shown in FIG. 4, the latitude/longitude information of the base station 202 at whose area the mobile radio station locates, the distance from the base station and the GPS information are used to measure a position of the own apparatus by a three-point cross method.

When only one GPS satellite can be captured, the GPS information thereof and information on distances between the own apparatus and two base stations are used to measure a position of the own apparatus.

When information from GPS satellite cannot be captured at all, distances between the own apparatus and three base stations are measured, and these pieces of information is used to measure a position of the own apparatus.

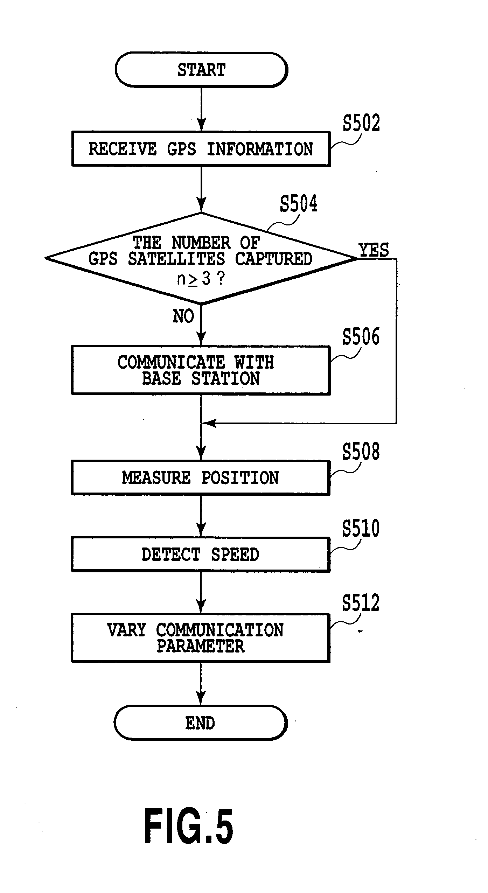

A procedure of a communication parameter varying method executed by the mobile radio station 204 according to the present embodiment will now be described with reference to FIG. 5.

In step S502, to capture a GPS satellite, the GPS receiving unit 210 receives GPS information for a predetermined period. In step S504,the determination unit 213 determines whether or not the number n of GPS satellites captured is three or more. If n is two or less, the flow proceeds to step S506; communication with the base station is performed, and a distance from the base station is determined in the positioning unit 214.

Here, when n = 2, a distance between the own apparatus and the base station at whose area the mobile radio station locates is determined. Also, when n = 1, distances between the own apparatus and the base station at whose area the mobile radio station locates and between the own apparatus and one peripheral base station are determined. Also, when n = 0, distances between the own apparatus and the base station at whose area the mobile radio station locates and between the own apparatus and two peripheral base stations are determined.

After the processing of step S506 is performed, or when it is determined in step S504 that three or more GPS satellites have been captured, the flow proceeds to step S508, and the positioning unit 214 measures, based on the information obtained, a position of the own apparatus by use of a three-point cross method. The position information obtained in this manner is stored in the storage unit 220.

In step S510, the speed detection unit 216 accesses the storage unit 220, and divides a distance between two positions of the own apparatus newly measured by a difference between the corresponding clock times to detect a speed.

In step S512, the parameter selection function unit 218 rewrites, according to the speed detected, communication parameters stored in the storage unit 220.

Communication parameters may be varied using a relational formula between moving speed and communication parameter. Alternatively, a table of moving speed versus communication parameter may be preliminarily stored, and the table may be consulted to obtain corresponding data and vary communication parameters.

### (Second Embodiment)

There will now be described a second embodiment of the present invention which, when no information required for position measurement is obtained via communication with a base station, detects a speed by use of an acceleration sensor.

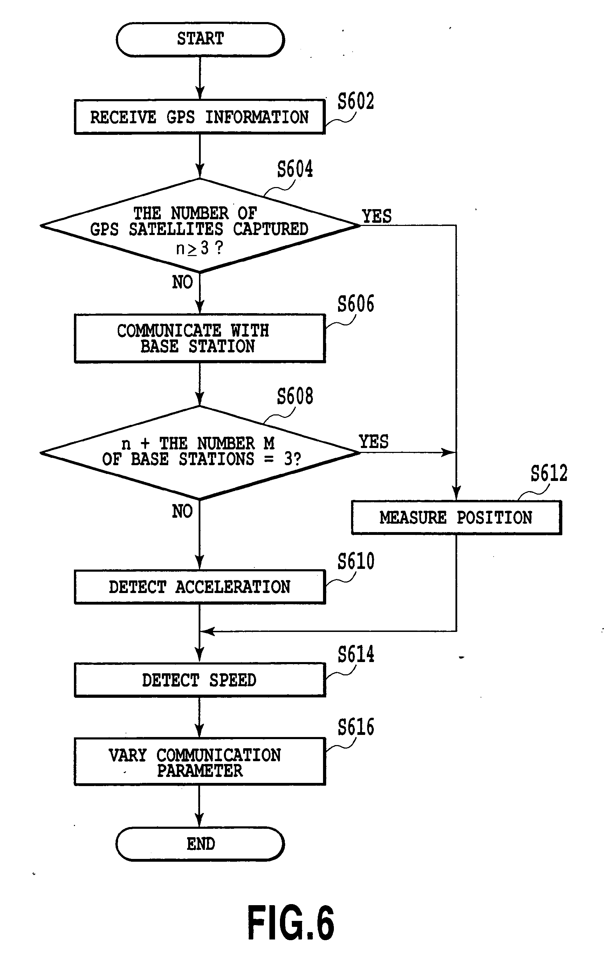

FIG. 6 is a flowchart showing a procedure of a communication parameter varying method executed by the mobile radio station 204 according to the present embodiment.

In step S602, to capture GPS satellites, the GPS receiving unit 210 receives GPS information for a predetermined period. In step S604,the determination unit 213 determines whether or not the number n of GPS satellites captured is three or more. If n is two or less, the flow proceeds to step S606; communication with the base station is performed, and a distance from the base station is determined in the positioning unit 214.

Here, when n = 2, a distance between the own apparatus and the base station at whose area the mobile radio station locates is determined. Also, when n = 1, distances between the own apparatus and the base station at whose area the mobile radio station locates and between the own apparatus and one peripheral base station are determined. Also, when n = 0, distances between the own apparatus and the base station at whose area the mobile radio station locates and between the own apparatus and two peripheral base stations are determined.

After the processing of step S606 is performed, it is determined whether or not the sum of the number of GPS satellites captured and the number m of base stations communicable is equal to three. If n + m is 2 or less, the flow proceeds to step S610; acceleration is detected in the acceleration sensor 212.

Meanwhile, when it is determined in step S604 that three or more GPS satellites have been captured, or when it is determined in step S608 that n + m = 3, the flow proceeds to step S612; the positioning unit 214 measures, based on the information obtained, a position of the own apparatus by a three-point cross method. The position information obtained in this manner is stored in the storage unit 220.

After the processing is performed in step S610, or after the position measurement is performed in step S612, the flow proceeds to step S612; speed detection is performed.

Here, when a position is measured in step S612, the speed detection unit 216 accesses the storage unit 220 and divides a distance between two positions newly measured by a difference between the corresponding clock times to thereby detect a speed. Meanwhile, when acceleration is detected in step S610, the acceleration sensor 212 integrates the acceleration with respect to time to determine a speed.

In step S616, the parameter selection function unit 218 varies communication parameters according to the speed detected.

With the above arrangement, even when speed detection by communication with the outside is not possible, speed detection can be performed using the sensor incorporated in the mobile radio station.

When the speed detection is performed, the sum of the number of captured GPS satellites and the number of captured base stations may be four or more. When the number of objects to be accessed is increased in this manner, speed detection can be performed more accurately.

### (Third Embodiment)

In a situation where communication parameters do not need to be updated, from a viewpoint of reducing processing load and power consumption, it is preferable to hold current communication parameters without frequently rewriting the communication parameters. This processing can be implemented by preliminarily storing in the storage unit 220 a speed detected by position measurement, and before varying communication parameters, determining by use of the speed information stored whether or not that varying operation is to be performed.

According to a third embodiment of the present invention, position measurement executed by the positioning unit 214 and speed detection executed by the speed detection unit 216 are repeated at a predetermined given interval and sequentially stored in the storage unit 220. Then the determination unit 213 accesses the storage unit 220 and compares two moving speeds newly measured. When the variation in moving speed detected by the speed detection unit 216 is a predetermined value or greater, the parameter selection function unit 218 varies communication parameters. Accordingly, when there is not change in moving speed, it is possible to prevent a communication parameter varying processing from being performed.

Also, it is possible that, before the processing shown in FIG. 5 or FIG. 6 is performed, acceleration is detected using the acceleration sensor 212, and it is determined from a result of acceleration detection in the determination unit 213 whether or not the own apparatus is in a stationary state (a stable state), and if so, the communication parameter varying control is terminated.

Also, additional steps may be inserted into FIG. 6, for example, to calculate a difference between a moving speed detected in step S614 and a moving speed previously detected and to determine whether or not the difference exceeds a predetermined range before step S616 of FIG. 6. In this case, when the difference exceeds the predetermined range, the flow proceeds to step S616.

Also, when acceleration is detected in step S610, the processings of steps S614 and S616 may be performed in the case that the acceleration exceeds a predetermined range.

By performing these processings, the number of times of varying various communication parameters can be reduced when the variation in speed is small. As a result, a function of suppressing power consumption is added.

### (Other Embodiments)

It is also possible that when signals are exchanged with a base station, fading pitch, Doppler shift and the like are acquired and speed detection is performed based on the above information or combination of these pieces of information. In a speed detection technique by Doppler shift, when communication with a plurality of base stations is performed, a relative speed with respect to each base station is calculated from Doppler shift frequency. Then, by combining speed vectors of the relative speeds calculated, a conclusive speed vector is determined and a speed is defined from the absolute value thereof. With the above configuration, speed detection can be performed without performing position measurement.

Also, a switch operable by the user to terminate the speed detection function may be arranged in the mobile radio station. This allows the user to terminate the position information acquisition or speed detection function. Consequently, a function of fixing communication parameters by the user and a function of suppressing power consumption can be added.

Also, at least two of three types of the above speed detection (i.e., the speed detection based on GPS information, the speed detection based on GPS information and information from a base station, and the speed detection by an acceleration sensor) may be performed simultaneously.

Also, in stead of using GPS, information may be acquired using another satellite navigation system, such as GLONASS, Galileo or MSAS in order to perform positioning, as long as it is practically usable.

The present invention has been described in detail with respect to preferred embodiments , and it will nowbe apparent from the foregoing to those skilled in the art that changes and modifications may be made without departing from the invention in its broader aspect, and it is the intention, therefore, in the appended claims to cover all such changes and modifications as fall within the true spirit of the invention.

Insofar as embodiments of the invention described above are implementable, at least in part, using a software-controlled programmable processing device such as a Digital Signal Processor, microprocessor, other processing devices, data processing apparatus or computer system, it will be appreciated that a computer program for configuring a programmable device, apparatus or system to implement the foregoing described methods is envisaged as an aspect of the present invention. The computer program may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program is stored on a carrier medium in machine or device readable form, for example in solid-state memory or magnetic memory such as disc or tape and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A mobile radio station communicating with an opposite radio station based on a communication parameter preliminarily set, the mobile radio station **characterized by** comprising:
speed detection means for detecting a moving speed of the own apparatus based on information acquired via a satellite navigation system and/or information acquired from at least one base station; and
control means for varying the communication parameter according to the moving speed detected by the speed detection means.

2. The mobile radio station according to claim 1,
**characterized in that** the speed detection means includes positioning means for measuring a position of the own apparatus based on information acquired via the satellite navigation system and/or information acquired from at least one base station, and wherein the moving speed of the own apparatus is detected based on positions measured at different times by the positioning means.

3. The mobile radio station according to claim 2,
**characterized in that** the positioning means calculates a distance from the base station to the mobile radio station based on a time period from when a signal is sent from the base station to when the signal reaches the mobile radio station.

4. The mobile radio station according to claim 1, further comprising a sensor detecting a moving speed of the own apparatus,
**characterized in that** when moving speed detection by the speed detection means is not possible, the control means varies the communication parameter according to the moving speed of the own apparatus determined by using the sensor.

5. The mobile radio station according to claim 1, further
**characterized in that**:
a sensor detecting the moving speed of the own apparatus; and
determination means for determining by using the sensor whether the mobile radio station is in a stationary state, wherein when the determination means determined that the mobile radio station is in the stationary state, the speed detection means terminates moving speed detection.

6. The mobile radio station according to claim 5, wherein when the moving speed detection by the speed detection means is not possible, the control means varies the communication parameter according to the moving speed of the own apparatus determined by using the sensor.

7. The mobile radio station according to claim 6, wherein the moving speed detection by the speed detection means is performed at a predetermined interval, and the control means varies the communication parameter when a variation in the moving speed detected by the speed detection means is a predetermined value or more.

8. A communication parameter control method executed by a mobile radio station communicating with an opposite radio station based on a communication parameter preliminarily set, the communication parameter control method
**characterized by** comprising the steps of:
detecting a moving speed of the own apparatus based on information acquired via a satellite navigation system and/or information acquired from at least one base station; and
varying the communication parameter according to the moving speed detected.
